# EUROPÄISCHE PATENTSCHRIFT

(11) **EP 4 003 762 B1**
(45) Veröffentlichungstag und Bekanntmachung des Hinweises auf die Patenterteilung: **14.02.2024**
(21) Anmeldenummer: 20733944.1
(22) Anmeldetag: 17.06.2020
(51) Int. Cl.: B60C 11/12, B60C 11/03

(54) **FAHRZEUGLUFTREIFEN**
PNEUMATIC TYRE FOR A VEHICLE
PNEUMATIQUE DE VÉHICULE

(30) Priorität: 25.07.2019 DE 102019211027
(43) Veröffentlichungstag der Anmeldung: 01.06.2022
(73) Patentinhaber: Continental Reifen Deutschland GmbH, 30165 Hannover (DE)
(72) Erfinder: SOO, Zi-Jie, 30419 Hannover (DE); TOMFORDE, Willem, 30419 Hannover (DE); CACERES, Angelica, 30419 Hannover (DE); ANG, Kim Aik, 30419 Hannover (DE); BEHR, Ulrich, 30419 Hannover (DE)
(74) Vertreter: Continental Corporation
(86) Internationale Anmeldenummer: PCT/EP2020/066836
(87) Internationale Veröffentlichungsnummer: WO 2021/013439

(56) Entgegenhaltungen:
- EP-A1- 3 354 486
- EP-A1- 3 412 476
- WO-A1-2015/185236
- JP-A- H02 310 108
- US-A1- 2018 104 992

## Beschreibung

Die Erfindung betrifft einen Fahrzeugluftreifen mit einem Laufstreifen mit Profilpositiven, in welchen durchquerende, unter einem Winkel von 0° bis 45° zur axialen Richtung sowie zumindest in Gruppen parallel zueinander verlaufende Einschnitte mit einer Breite von 0,4 mm bis 1,2 mm ausgebildet sind, wobei die Einschnitte jeweils durch einen Kanal mit zumindest einem von der Laufstreifenperipherie ausgehenden, in radialer Richtung verlaufenden Kanalabschnitt und zumindest einem an diesen anschließenden aus dem Profilpositiv austretenden Kanalabschnitt lokal verbreitert sind, wobei sämtlich Kanalabschnitte einen kreisförmigen Querschnitt aufweisen.

Ein derartiger Fahrzeugluftreifen ist beispielsweise aus der DE 10 2014 210 823 A1 bekannt. Die Einschnitte weisen jeweils einen mittleren Abschnitt mit einer Tiefe von mindestens 70% der Profiltiefe und zwei seichtere Randabschnitte unterschiedlicher Tiefen auf. Ferner ist in den Einschnitten jeweils zumindest ein von der Laufstreifenperipherie ausgehender Kanal ausgebildet, welcher in einen weiteren Kanal mündet, der in einem der seichteren Randabschnitte am Einschnittgrund verläuft. Beim Fahren auf Schnee sollen diese Maßnahmen dazu beitragen, sich bildendes Schmelzwasser über den seichteren Randabschnitt abzuleiten.

Aus der EP 3 354 486 A1 ist ein Fahrzeugluftreifen mit einem Laufstreifen mit Profilpositiven bekannt, welche mit Einschnitten versehen sind. Die Einschnitte verlaufen, in Draufsicht betrachtet, zick-zack-förmig und sind jeweils durch einen Kanal verbreitert. Der Kanal weist zwei von der Laufstreifenperipherie ausgehende, in radialer Richtung verlaufende Kanalabschnitte und einen in konstanter Tiefe verlaufenden, beidseitig aus dem Profilpositiv austretenden Kanalabschnitt auf. Gemäß einem Ausführungsbeispiel ist der beidseitig aus dem Profilpositiv austretende Kanalabschnitt an mehreren Stellen nach dem Venturiprinzip verengt und verfügt über einen sich zur Kanalöffnung verbreiternden Kanalendabschnitt. Diese in Draufsicht zick-zack-förmig verlaufenden Einschnitte sollen für die Bremsperformance und die Wasserdrainageeigenschaften vorteilhaft sein.

Maßnahmen zur Verbesserung der Entwässerungswirkung von Laufstreifen sind nach wie vor ein wichtiges Thema bei der Entwicklung von Profilen für Laufstreifen von Fahrzeugluftreifen. Über Einschnitte sowie im Inneren dieser verlaufende Kanäle lässt sich beim Fahren auf nasser Fahrbahn Wasser in die jeweils nächstliegende Rille bzw. aus der Bodenaufstandsfläche ableiten, wobei diesbezüglich die Ausgestaltung der Einschnitte bzw. der Kanäle weiter verbesserungswürdig ist.

Der Erfindung liegt daher die Aufgabe zugrunde, bei einem Fahrzeugluftreifen der eingangs genannten Art die Wasserableitung über die in den Profilpositiven ausgebildeten Einschnitte weiter zu verbessern.

Gelöst wird die gestellte Aufgabe erfindungsgemäß dadurch, dass sich der Kanal aus einem verkehrt T-förmigen Kanalbereich und zwei jeweils über eine Kanalöffnung aus dem Profilpositiv austretenden Kanalabschnitten zusammensetzt, wobei sich der verkehrt T-förmige Kanalbereich aus dem von der Laufstreifenperipherie ausgehenden, in radialer Richtung verlaufenden Kanalabschnitt, welcher den T-Längsbalken bildet, und einem den T-Querbalken bildenden Kanalabschnitt zusammensetzt, wobei der den T-Längsbalken und der den T-Querbalken bildende Kanalabschnitt übereinstimmende Durchmesser aufweisen und die schmälsten Kanalabschnitte sind,
wobei der den T-Querbalken bildende Kanalabschnitt eine Länge aufweist, welche 150% bis 300% des Durchmessers des den T-Längsbalken bzw. des den T-Querbalken bildenden Kanalabschnittes beträgt,
wobei an die Enden des den T-Querbalken bildenden Kanalabschnittes jeweils einer der über eine Kanalöffnung aus dem Profilpositiv austretenden Kanalabschnitte anschließt, welche sich jeweils ausgehend von dem den T-Querbalken bildenden Kanalabschnitt zu ihrer Kanalöffnung verbreitern.

Über den von der Laufstreifenperipherie ausgehenden Kanalabschnitt, welcher den T-Längsbalken bildet, wird das Wasser unmittelbar an den den T-Querbalken bildenden Kanalabschnitt geleitet. Diese beiden Abschnitte sind gemäß der Erfindung am schmälsten ausgeführt, wodurch das Wasser sehr wirkungsvoll in den Kanal hineingezogen bzw. hineingesaugt und in diesem beschleunigt wird. Nachfolgend wird das Wasser über Kanalabschnitte, welche sich verbreitern, abgeleitet, wobei durch die Verbreiterung - gegenüber den bekannten Maßnahmen - die Gefahr, dass die Einschnitte "überlaufen" deutlich reduziert ist. Somit ist die Entwässerungsleistung der Einschnitte gegenüber den bekannten Maßnahmen deutlich gesteigert ist.

Da der den T-Querbalken bildende Kanalabschnitt eine Länge aufweist, welche 150% bis 300% des Durchmessers des den T-Längsbalken bzw. des den T-Querbalken bildenden Kanalabschnittes beträgt, erreicht das Wasser vorteilhafter Weise sehr schnell die sich zu den Kanalöffnungen verbreiternden Kanalabschnitte, wodurch die erwähnte Gefahr, dass die Einschnitte überlaufen, weiter reduziert ist.

Die Wasserableitung erfolgt besonders wirkungsvoll und zuverlässig, wenn die Kanalabschnitte, welche über eine Kanalöffnung aus dem Profilpositiv austreten, an der Kanalöffnung einen Durchmesser aufweisen, welcher 150% bis 250%, insbesondere 175% bis 225%, des Durchmessers des den T-Längsbalken bzw. den T-Querbalken bildenden Kanalabschnittes aufweisen.

Ferner ist es günstig, wenn Kanäle vorgesehen sind, bei welchen sich die Kanalabschnitte, welche über eine Kanalöffnung aus dem Profilpositiv austreten, ausgehend von dem den T-Querbalken bildenden Kanalabschnitt zu ihrer Kanalöffnung kontinuierlich verbreitern. Solche Kanäle ermöglichen vor allem eine besonders verwirbelungsarme Wasserableitung.

Es ist außerdem von Vorteil, wenn Kanäle vorgesehen sind, bei welchen sich die Kanalabschnitte, welche über eine Kanalöffnung aus dem Profilpositiv austreten, jeweils aus einem unmittelbar an den den T-Querbalken bildenden Kanalabschnitt anschließenden, sich verbreiternden Kanalstück und einem Kanalstück mit einem konstanten Durchmesser zusammensetzen. Solche Kanäle weisen eine hohe Wasseraufnahmekapazität auf, wodurch die Gefahr, dass die Einschnitte überlaufen, weiter reduziert ist.

Die Wasserableitung über die Kanäle lässt sich auf besonders verwirbelungsarme Weise bewerkstelligen, wenn die Kanalabschnitte, welche über eine Kanalöffnung aus dem Profilpositiv austreten, gemeinsam mit dem den T-Querbalken bildenden Kanalabschnitt den Einschnittgrund des jeweiligen Einschnittes mitbilden.

Gemäß einer weiteren bevorzugten Ausführungsvariante weisen der den T-Querbalken bildende Kanalabschnitt und die jeweils über eine Kanalöffnung aus dem Profilpositiv austretenden Kanalabschnitte eine gemeinsame Hauptachse auf, welche in einer konstanten Tiefe von 65% bis 85%, insbesondere von 70% bis 80%, der Tiefe der Einschnitte verläuft. Auch durch diese Maßnahme lässt sich die Wasserableitung über die Kanäle weiter verbessern.

Eine besonders gleichmäßige Entwässerung der Profilpositiven wird erreicht, wenn die Einschnitte jeweils bezüglich einer Querschnitt-Mittelebene, welche bezogen auf die Längserstreckung des jeweiligen Einschnittes durch die Mitte des Einschnittes verläuft, symmetrisch ausgeführt sind.

Die erwähnte Sogwirkung der Kanäle ist besonders stark ausgeprägt, wenn der Durchmesser, welchen der den T-Längsbalken und der den T-Querbalken bildende Kanalabschnitt aufweist, 0,8 mm bis 3,0 mm, insbesondere mindestens 1,5 mm, beträgt.

Weitere Merkmale, Vorteile und Einzelheiten der Erfindung werden nun anhand der Zeichnung, die schematisch Ausführungsbeispiele der Erfindung zeigt, näher erläutert. Dabei zeigen
Fig. 1 eine Ansicht auf einen Teilbereich eines Laufstreifens eines Fahrzeugluftreifens mit einer ersten Ausführungsvariante der Erfindung,
Fig. 2 eine Ansicht auf eine Einschnittwand eines im Laufstreifen ausgebildeten Einschnittes,
Fig. 3 eine Ansicht auf eine Einschnittwand mit einer zweiten Ausführungsvariante der Erfindung,
Fig. 4 eine Ansicht auf eine Einschnittwand mit einer dritten Ausführungsvariante der Erfindung und
Fig. 5 eine Ansicht auf eine Einschnittwand mit einer vierten Ausführungsvariante der Erfindung.

Gemäß der Erfindung ausgeführte Fahrzeugluftreifen sind insbesondere Reifen in Radialbauart für Personenkraftwagen, Vans oder Light-Trucks.

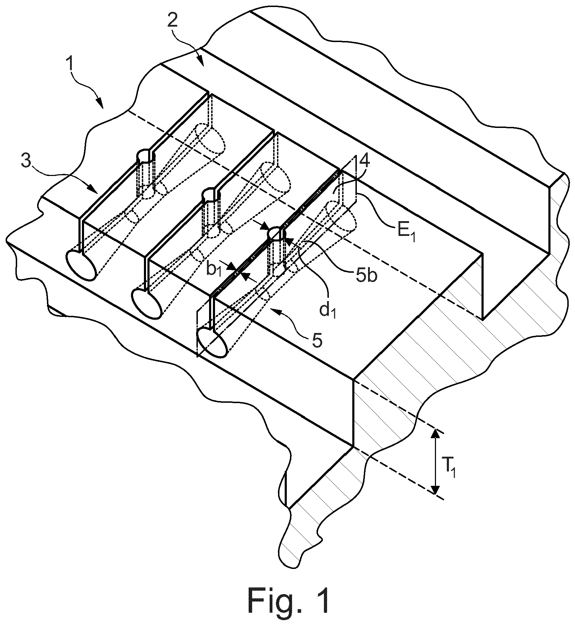

Fig. 1 zeigt eine Ansicht auf einen Umfangsabschnitt einer mittleren Profilrippe 1 eines Laufstreifens eines Fahrzeugluftreifens. Die mittlere Profilrippe 1 ist von zwei gerade verlaufenden Umfangsrillen 2 begrenzt, welche auf die jeweils vorgesehene Profiltiefe T₁ von üblicherweise 6,5 mm bis 10,0 mm ausgeführt sind.

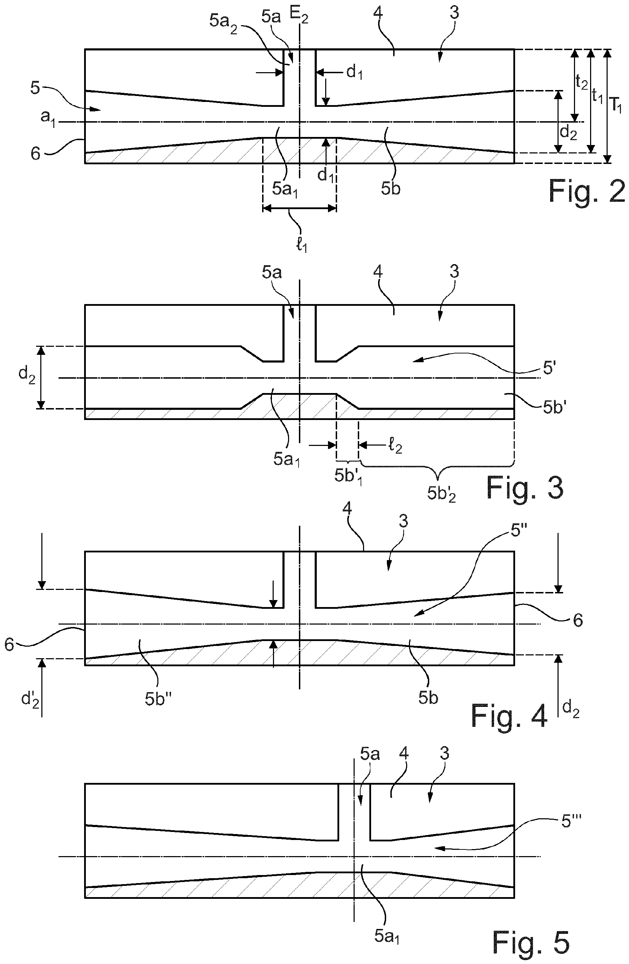

Die mittlere Profilrippe 1 ist mit einer Anzahl von Einschnitten 3 versehen, welche in Draufsicht gerade sowie in axialer Richtung verlaufen, die Profilrippe 1 durchqueren und daher in die beiden Umfangsrillen 2 einmünden. Die Einschnitte 3 weisen jeweils zwei einander gegenüberliegende Einschnittwände 4 auf, welche, wie noch erläutert wird, lokal von einem Kanal 5 verbreitert sind. Die Einschnitte 3 weisen zwischen ihren Einschnittwänden 4 im Bereich außerhalb des Kanals 5 eine Breite b₁ von 0,4 mm bis 1,2 mm, insbesondere von bis zu 0,8 mm, sowie in radialer Richtung zumindest an ihrer tiefsten Stelle eine Tiefe t₁ (Fig. 2) von 65% bis 100%, insbesondere von bis zu 90%, der Profiltiefe T₁ auf. Die weitere Ausgestaltung der Einschnitte 3 und des Kanals 5 wird nachfolgend anhand eines einzelnen Einschnittes 3 erläutert.

Wie Fig. 1 in Kombination mit Fig. 2 zeigt, ist der Einschnitt 3 beim gezeigten Ausführungsbeispiel bezüglich einer in Längserstreckung durch die Mitte des Einschnittes 3 verlaufende Längsschnitt-Mittelebene E₁ (Fig. 1) und bezüglich einer zur Längsschnitt-Mittelebene E₁ orthogonal sowie bezogen auf die Längserstreckung durch die Mitte des Einschnittes 3 verlaufende Querschnitt-Mittelebene E₂ (Fig. 2) symmetrisch ausgeführt.

Gemäß Fig. 2 setzt sich der Kanal 5 aus einem von der Laufstreifenperipherie ausgehenden, verkehrt T-förmige Kanalbereich 5a und zwei zu je einer der Umfangsrillen 2 verlaufenden, seitlichen Kanalabschnitten 5b zusammen. Der verkehrt T-förmige Kanalbereich 5a ist mittig im Einschnitt 3 ausgebildet und setzt sich aus einem den Querbalken der T-Form bildenden Kanalabschnitt 5ai und einem in diesen einmündenden, den Vertikalbalken der T-Form bildenden Kanalabschnitt 5a₂ zusammen. Der den Vertikalbalken der T-Form bildende Kanalabschnitt 5a₂ verläuft in radialer Richtung, weist einen kreisförmigen Querschnitt sowie einen konstanten Durchmesser d₁ von 0,8 mm bis 3,0 mm, insbesondere von mindestens 1,5 mm, auf. Der den Querbalken der T-Form bildende Kanalabschnitt 5ai verläuft, der T-Form entsprechend, senkrecht zum Kanalabschnitt 5a₂, weist - außerhalb des Bereiches der Einmündung des Kanalabschnittes 5a₂ - ebenfalls den Durchmesser d₁ sowie ferner eine Länge l₁ von 150% bis 300% des Durchmessers d₁ auf. Der den Querbalken der T-Form bildende Kanalabschnitt 5ai befindet sich - bezogen auf eine Hauptachse a₁, welche parallel zur Laufstreifenperipherie und in der Längsschnitt-Mittelebene E₁ verläuft - in radialer Richtung in einer Tiefe t₂ von 65% bis 85%, insbesondere von 70% bis 80%, der Tiefe t₁ des Einschnittes 3.

Die seitlichen Kanalabschnitte 5b schließen bündig an die Enden des den Querbalken der T-Form bildenden Kanalabschnittes 5a₁ an, weisen über ihre gesamte Erstreckung einen kreisförmigen Querschnitt auf und treten jeweils über eine Kanalöffnungen 6 aus der Profilrippe 1 aus. Die bereits erwähnte Hauptachse a₁ ist gleichzeitig die Hauptachse der seitlichen Kanalabschnitte 5b, welche bezüglich dieser rotationssymmetrisch ausgeführt sind. Die seitlichen Kanalabschnitte 5b weisen jeweils einen ausgehend vom Kanalabschnitt 5a₁ zu ihrer Kanalöffnung 6 entlang der Hauptachse a₁ kontinuierlich zunehmenden Durchmesser auf. An den Kanalöffnungen 6 weisen die seitlichen Kanalabschnitte 5b jeweils einen Durchmesser d₂ auf, welcher 150% bis 250%, insbesondere 175% bis 225%, des Durchmessers d₁ beträgt.

Beim gezeigten Ausführungsbeispiel ist der Einschnittgrund des Einschnittes 3 durch die seitlichen Kanalabschnitte 5b und den den Querbalken der T-Form bildenden Kanalabschnitt 5a₁ mitgebildet, der Kanalabschnitt 5a₁ und die Kanalabschnitte 5b verlaufen daher am Einschnittgrund.

Fig. 3 bis Fig. 5 zeigen jeweils eine Ansicht auf eine Eischnittwand 4 eines Einschnittes 3, wobei Kanäle 5', 5", 5‴ vorgesehen sind, welche Varianten des Kanals 5 sind.

Der Kanal 5' (Fig. 3) unterscheidet sich vom Kanal 5 durch seine seitlichen Kanalabschnitte Sb`, welche an den den Querbalken der T-Form bildenden Kanalabschnitt 5a₁ anschließen. Die Kanalabschnitte Sb` setzen sich jeweils aus einem unmittelbar an den Kanalabschnitt 5a₁ anschließenden, sich ausgehend von diesem verbreiternden Kanalstück 5b'₁ und einem den bereits erwähnten Durchmesser d₂ aufweisenden Kanalstück 5b'₂ zusammen. Die sich verbreiternden Kanalstücke 5b'₁ weisen daher einen vom Kanalabschnitt 5a₁ zum jeweiligen Kanalstück 5b'₂ kontinuierlich von d₁ auf d₂ zunehmenden Durchmesser auf. Ferner weisen die sich verbreiternden Kanalstücke 5b'₁ jeweils eine an der Hauptachse a₁ ermittelte Länge l₂ von 75% bis 150% des Durchmessers d₁ auf.

Der Kanal S" (Fig. 4) weist einen einzigen, analog zum Kanal 5 ausgeführten, seitlichen Kanalabschnitt 5b und einen seitlichen Kanalabschnitt 5b" auf. Der seitliche Kanalabschnitt 5b" weist an seiner Kanalöffnung 6 einen Durchmesser d₂' auf, welcher größer ist als der erwähnte Durchmesser d₂ des seitlichen Kanalabschnittes 5b an seiner Kanalöffnung 6.

Beim Kanal 5‴ (Fig. 5) ist der T-förmige Kanalbereich 5a gegenüber der Mitte des Einschnittes 3 versetzt ausgebildet. An den den Querbalken der T-Form bildenden Kanalabschnitt 5a₁ schließen, in Fig. 5 nicht bezifferte, entsprechend angepasste, seitliche Kanalabschnitte an.

Die Erfindung ist auf die beschriebenen Ausführungsvarianten nicht beschränkt aber durch die angefügten Ansprüche.

Die Kanäle können derart ausgeführt sein, dass diese den Einschnittgrund des Einschnitts nicht mitbilden, sondern zu diesem in radialer Richtung einen Abstand von insbesondere mindestens 1,0 mm aufweisen.

Die Einschnitte mit den Kanälen können unter einem von der axialen Richtung um bis zu 45° abweichenden Winkel verlaufen sowie in beliebigen Profilpositiven, daher beispielsweise auch in mittleren oder schulterseitigen Profilblöcken, ausgebildet sein. Außerdem können die Einschnitte in Draufsicht auch zumindest abschnittsweise wellen- oder zick-zack-förmig verlaufen, wobei die Kanäle weiterhin, wie beschrieben ausgeführt sind.

Ferner können die Einschnitte in an sich bekannter Weise ausgeführte, angehobene Randabschnitte aufweisen, wobei sich sämtliche Kanalabschnitte in einer auf die Ausgestaltung der Randabschnitte abgestimmten konstanten Tiefe (bezogen auf die Hauptachse a₁) befinden, sodass sie radial außerhalb der Randabschnitte verlaufen. Alternativ können bei dieser Variante die jeweiligen Kanalabschnitte im Bereich der Randabschnitte entsprechend ansteigen. Die Randabschnitte weisen vorzugsweise eine Tiefe von 50% bis 90% der maximalen Tiefe des Einschnittes auf.

### Bezugsziffernliste

- 1: mittlere Profilrippe
- 2: Umfangsrille
- 3: Einschnitt
- 4: Einschnittwand
- 5, 5', 5", 5'": Kanal
- 5a: Kanalbereich
- 5a₁, 5a₂: Kanalabschnitt
- 5b, 5b', 5b: seitlicher Kanalabschnitt
- 5b'₁, 5b'₂: Kanalstück
- 6: Kanalöffnung
- a₁: Hauptachse
- b₁: Breite
- d₁, d₂, d₂: Durchmesser
- E₁: Längsschnitt-Mittelebene
- E₂: Querschnitt-Mittelebene
- l₁, l₂: Länge
- T₁: Profiltiefe
- t₁, t₂: Profiltiefe

## Patentansprüche

1. Fahrzeugluftreifen mit einem Laufstreifen mit Profilpositiven (1), in welchen durchquerende, unter einem Winkel von 0° bis 45° zur axialen Richtung sowie zumindest in Gruppen parallel zueinander verlaufende Einschnitte (3) mit einer Breite (b₁) von 0,4 mm bis 1,2 mm ausgebildet sind, wobei die Einschnitte (3) jeweils durch einen Kanal (5, 5', 5", 5‴) mit zumindest einem von der Laufstreifenperipherie ausgehenden, in radialer Richtung verlaufenden Kanalabschnitt (5a₂) und zumindest einem an diesen anschließenden aus dem Profilpositiv (1) austretenden Kanalabschnitt (5b, 5b', 5b") lokal verbreitert sind, wobei sämtlich Kanalabschnitte (5a₁, 5a₂, 5b, 5b', 5b") einen kreisförmigen Querschnitt aufweisen,
**dadurch gekennzeichnet,**
**dass** sich der Kanal (5, 5', 5", 5‴) aus einem verkehrt T-förmigen Kanalbereich (5a) und zwei jeweils über eine Kanalöffnung (6) aus dem Profilpositiv (1) austretenden Kanalabschnitten (5b, 5b, 5b") zusammensetzt, wobei sich der verkehrt T-förmige Kanalbereich (5a) aus dem von der Laufstreifenperipherie ausgehenden, in radialer Richtung verlaufenden Kanalabschnitt (5a₂), welcher den T-Längsbalken bildet, und einem den T-Querbalken bildenden Kanalabschnitt (5a₁) zusammensetzt, wobei der den T-Längsbalken und der den T-Querbalken bildende Kanalabschnitt (5ai, 5a₂) übereinstimmende Durchmesser (d₁) aufweisen und die schmälsten Kanalabschnitte (5a₁, 5a₂, 5b, 5b', 5b") sind,
wobei der den T-Querbalken bildende Kanalabschnitt (5a₁) eine Länge (l₁) aufweist, welche 150% bis 300% des Durchmessers (d₁) des den T-Längsbalken bzw. des den T-Querbalken bildenden Kanalabschnittes (5a₁, 5a₂) beträgt, wobei an die Enden des den T-Querbalken bildenden Kanalabschnittes (5a₁) jeweils einer der über eine Kanalöffnung (6) aus dem Profilpositiv (1) austretenden Kanalabschnitte (5b, 5b', 5b") anschließt, welche sich jeweils ausgehend von dem den T-Querbalken bildenden Kanalabschnitt (5a₁) zu ihrer Kanalöffnung (6) verbreitern.

2. Fahrzeugluftreifen nach Anspruch 1, **dadurch gekennzeichnet, dass** die Kanalabschnitte (5b, 5b', 5b"), welche über eine Kanalöffnung (6) aus dem Profilpositiv (1) austreten, an der Kanalöffnung (6) einen Durchmesser (d₂) aufweisen, welcher 150% bis 250%, insbesondere 175% bis 225%, des Durchmessers (d₁) des den T-Längsbalken bzw. den T-Querbalken bildenden Kanalabschnittes (5a₁, 5a₂) aufweisen.

3. Fahrzeugluftreifen nach Anspruch 1 oder 2, **dadurch gekennzeichnet, dass** Kanäle (5, 5", 5‴) vorgesehen sind, bei welchen sich die Kanalabschnitte (5b, 5b"), welche über eine Kanalöffnung (6) aus dem Profilpositiv (1) austreten, ausgehend von dem den T-Querbalken bildenden Kanalabschnitt (5a₁) zu ihrer Kanalöffnung (8) kontinuierlich verbreitern.

4. Fahrzeugluftreifen nach einem der Ansprüche 1 bis 3, **dadurch gekennzeichnet, dass** Kanäle (5') vorgesehen sind, bei welchen sich die Kanalabschnitte (Sb`), welche über eine Kanalöffnung (6) aus dem Profilpositiv (1) austreten, jeweils aus einem unmittelbar an den den T-Querbalken bildenden Kanalabschnitt (5a₁) anschließenden, sich verbreiternden Kanalstück (5b'₁) und einem Kanalstück (5b'₂) mit einem konstanten Durchmesser (d₂) zusammensetzen.

5. Fahrzeugluftreifen nach einem der Ansprüche 1 bis 4, **dadurch gekennzeichnet, dass** die Kanalabschnitte (5b, 5b', 5b"), welche über eine Kanalöffnung (6) aus dem Profilpositiv (1) austreten, gemeinsam mit dem den T-Querbalken bildenden Kanalabschnitt (5a₁) den Einschnittgrund des jeweiligen Einschnittes (3) mitbilden.

6. Fahrzeugluftreifen nach einem der Ansprüche 1 bis 5, **dadurch gekennzeichnet, dass** der den T-Querbalken bildende Kanalabschnitt (5a₁) und die jeweils über eine Kanalöffnung (6) aus dem Profilpositiv (1) austretenden Kanalabschnitte (5b, 5b', 5b") eine gemeinsame Hauptachse (a₁) aufweisen, welche in einer konstanten Tiefe (t₂) von 65% bis 85%, insbesondere von 70% bis 80%, der Tiefe (t₁) der Einschnitte (3) verläuft.

7. Fahrzeugluftreifen nach einem der Ansprüche 1 bis 6, **dadurch gekennzeichnet, dass** die Einschnitte (3) jeweils bezüglich einer Querschnitt-Mittelebene (E₂), welche bezogen auf die Längserstreckung des jeweiligen Einschnittes (3) durch die Mitte des Einschnittes (3) verläuft, symmetrisch ausgeführt sind.

8. Fahrzeugluftreifen nach einem der Ansprüche 1 bis 7, **dadurch gekennzeichnet, dass** der Durchmesser (d₁), welchen der den T-Längsbalken und der den T-Querbalken bildende Kanalabschnitt (5a₁, 5a₂) aufweist, 0,8 mm bis 3,0 mm, insbesondere mindestens 1,5 mm, beträgt.

## Claims

1. Pneumatic vehicle tyre having a tread with profile positives' (1) in which there are formed through-extending sipes (3) which run at an angle of 0° to 45° with respect to the axial direction and which run parallel to one another at least in groups and which have a width (b₁) of 0.4 mm to 1.2 mm, wherein the sipes (3) are each locally widened by a channel (5, 5', 5", 5‴) with at least one channel portion (5a₂) which proceeds from the tread periphery and which runs in a radial direction, and at least one channel portion (5b, 5b', 5b") which adjoins said channel portion (5a₂) and which emerges from the profile positive (1), wherein all of the channel portions (5a₁, 5a₂, 5b, 5b', 5b") have a circular cross section,
**characterized in that**
the channel (5, 5', 5", 5‴) is composed of an inverted T-shaped channel region (5a) and two channel portions (5b, 5b, 5b") each emerging from the profile positive (1) by way of a channel opening (6), wherein the inverted T-shaped channel region (5a) is composed of the channel portion (5a₂) which proceeds from the tread periphery and which runs in a radial direction and forms the longitudinal beam of the T, and a channel portion (5a₁) which forms the transverse beam of the T, wherein the channel portions (5a₁, 5a₂) forming the longitudinal beam of the T and the transverse beam of the T have identical diameters (d₁) and are the narrowest channel portions (5a₁, 5a₂, 5b, 5b', 5b");
wherein the channel portion (5a₁) forming the transverse beam of the T has a length (l₁) which is 150% to 300% of the diameter (d₁) of the channel portion (5a₁, 5a₂) forming the longitudinal beam of the T, or the transverse beam of the T, respectively, wherein the ends of the channel portion (5a₁) forming the transverse beam of the T are in each case adjoined by one of the channel portions (5b, 5b', 5b") that emerge from the profile positive (1) by way of a channel opening (6) and, proceeding from the channel portion (5a₁) forming the transverse beam of the T, widen in each case towards their channel opening (6).

2. Pneumatic vehicle tyre according to Claim 1, **characterized in that** the channel portions (5b, 5b', 5b") that emerge from the profile positive (1) by way of a channel opening (6) at the channel opening (6) have a diameter (d₂) which is 150% to 250%, in particular 175% to 225%, of the diameter (d₁) of the channel portion (5a₁, 5a₂) forming the longitudinal beam of the T, or the transverse beam of the T, respectively.

3. Pneumatic vehicle tyre according to Claim 1 or 2, **characterized in that** provided are channels (5, 5", 5‴) in which the channel portions (5b, 5b") that emerge from the profile positive (1) by way of a channel opening (6), proceeding from the channel portion (5a₁) forming the transverse beam of the T, widen continuously towards their channel opening (8).

4. Pneumatic vehicle tyre according to one of Claims 1 to 3, **characterized in that** provided are channels (5') in which the channel portions (5b') that emerge from the profile positive (1) by way of a channel opening (5) are in each case composed of a channel piece (5b'₁), which widens and directly adjoins the channel portion (5a₁) forming the transverse beam of the T, and a channel piece (5b'₂) with a constant diameter (d₂).

5. Pneumatic vehicle tyre according to one of Claims 1 to 4, **characterized in that** the channel portions (5b, 5b', 5b") that emerge from the profile positive (1) by way of a channel opening (6), conjointly with the channel portion (5a₁) forming the transverse beam of the T, participate in forming the sipe base of the respective sipe (3).

6. Pneumatic vehicle tyre according to one of Claims 1 to 5, **characterized in that** the channel portion (5a₁) forming the transverse beam of the T, and the channel portions (5b, 5b', 5b") that each emerge from the profile positive (1) by way of a channel opening (6), have a common main axis (a₁) which runs at a constant depth (t₂) of 65% to 85%, in particular of 70% to 80%, of the depth (t₁) of the sipes (3).

7. Pneumatic vehicle tyre according to one of Claims 1 to 6, **characterized in that** the sipes (3) are in each case embodied to be symmetrical with respect to a cross-sectional central plane (E₂) which in terms of the longitudinal extent of the respective sipe (3) runs through the centre of the sipe (3).

8. Pneumatic vehicle tyre according to one of Claims 1 to 7, **characterized in that** the diameter (d₁) of the channel portions (5a₁, 5a₂) forming the longitudinal beam of the T and the transverse beam of the T is 0.8 mm to 3.0 mm, in particular at least 1.5 mm.

## Revendications

1. Pneumatique de véhicule avec une bande de roulement avec des éléments positifs de profil (1), dans lesquels sont réalisées des entailles (3) traversantes, s'étendant selon un angle de 0° à 45° par rapport à la direction axiale ainsi qu'au moins par groupes parallèlement les unes aux autres, avec une largeur (b₁) de 0,4 mm à 1,2 mm, les entailles (3) étant respectivement élargies localement par un canal (5, 5', 5", 5‴) avec au moins une section de canal (5a₂) partant de la périphérie de la bande de roulement, s'étendant en direction radiale, et au moins une section de canal (5b, 5b', 5b") se raccordant à celle-ci, sortant de l'élément positif de profil (1), toutes les sections de canal (5a₁, 5a₂, 5b, 5b', 5b") présentant une section transversale circulaire,
**caractérisé en ce que**
le canal (5, 5', 5", 5‴) se compose d'une zone de canal (5a) en forme de T inversé et de deux sections de canal (5b, 5b, 5b") sortant respectivement de l'élément positif de profil (1) par une ouverture de canal (6), la zone de canal (5a) en forme de T inversé se composant de la section de canal (5a₂) partant de la périphérie de la bande de roulement, s'étendant en direction radiale, qui forme la barre longitudinale du T, et d'une section de canal (5a₁) formant la barre transversale du T, la section de canal (5a₁, 5a₂) formant la barre longitudinale du T et celle formant la barre transversale du T présentant des diamètres (d₁) concordants et étant les sections de canal les plus étroites (5a₁, 5a₂, 5b, 5b', 5b"),
la section de canal (5a₁) formant la barre transversale du T présentant une longueur (l₁) qui est de 150 % à 300 % du diamètre (d₁) de la section de canal (5a₁, 5a₂) formant la barre longitudinale du T ou de celle formant la barre transversale du T, l'une des sections de canal (5b, 5b', 5b") sortant de l'élément positif de profil (1) par une ouverture de canal (6), qui s'élargissent respectivement à partir de la section de canal (5a1) formant la barre transversale du T vers leur ouverture de canal (6), se raccordant respectivement aux extrémités de la section de canal (5a1) formant la barre transversale du T.

2. Pneumatique de véhicule selon la revendication 1, **caractérisé en ce que** les sections de canal (5b, 5b', 5b") qui sortent de l'élément positif de profil (1) par une ouverture de canal (6) présentent, à l'ouverture de canal (6), un diamètre (d₂) qui représente 150 % à 250 %, notamment 175 % à 225 %, du diamètre (d₁) de la section de canal (5a₁, 5a₂) formant la barre longitudinale du T ou de celle formant la barre transversale du T.

3. Pneumatique de véhicule selon la revendication 1 ou 2, **caractérisé en ce qu'**il est prévu des canaux (5, 5", 5‴) dans lesquels les sections de canal (5b, 5b"), qui sortent de l'élément positif de profil (1) par une ouverture de canal (6), s'élargissent de manière continue à partir de la section de canal (5a₁) formant la barre transversale du T vers leur ouverture de canal (8).

4. Pneumatique de véhicule selon l'une quelconque des revendications 1 à 3, **caractérisé en ce qu'**il est prévu des canaux (5') dans lesquels les sections de canal (5b') qui sortent de l'élément positif de profil (1) par une ouverture de canal (6) se composent chacune d'un tronçon de canal (5b'₁) qui s'élargit, qui se raccorde directement à la section de canal (5a₁) formant la barre transversale du T, et d'un tronçon de canal (5b'₂) ayant un diamètre constant (d₂).

5. Pneumatique de véhicule selon l'une quelconque des revendications 1 à 4, **caractérisé en ce que** les sections de canal (5b, 5b', 5b"), qui sortent de l'élément positif de profil (1) par une ouverture de canal (6), forment conjointement avec la section de canal (5a₁) formant la barre transversale du T le fond d'entaille de l'entaille (3) respective.

6. Pneumatique de véhicule selon l'une quelconque des revendications 1 à 5, **caractérisé en ce que** la section de canal (5a₁) formant la barre transversale du T et les sections de canal (5b, 5b', 5b") sortant chacune de l'élément positif de profil (1) par une ouverture de canal (6) présentent un axe principal (a₁) commun qui s'étend à une profondeur (t₂) constante de 65 % à 85 %, notamment de 70 % à 80 %, de la profondeur (t₁) des entailles (3).

7. Pneumatique de véhicule selon l'une quelconque des revendications 1 à 6, **caractérisé en ce que** les entailles (3) sont réalisées chacune de manière symétrique par rapport à un plan médian de section transversale (E₂) qui s'étend par le milieu de l'entaille (3) par rapport à l'étendue longitudinale de l'entaille (3) respective.

8. Pneumatique de véhicule selon l'une quelconque des revendications 1 à 7, **caractérisé en ce que** le diamètre (d₁) que présente la section de canal (5a₁, 5a₂) formant la barre longitudinale du T et celle formant la barre transversale du T est de 0,8 mm à 3,0 mm, notamment d'au moins 1,5 mm.
